# EUROPEAN PATENT SPECIFICATION

(11) **EP 2 744 653 B1**
(45) Date of publication and mention of the grant of the patent: **27.09.2017**
(21) Application number: 12826217.7
(22) Date of filing: 20.08.2012
(51) Int. Cl.: B32B 21/14, B32B 37/12, E04B 1/76, B32B 33/00, E04C 2/24, F41H 5/04

(54) **INSULATED PANEL AND METHOD OF MANUFACTURING THE SAME**
ISOLIERTE PLATTE UND HERSTELLUNGSVERFAHREN DAFÜR
PANNEAU ISOLÉ ET SON PROCÉDÉ DE FABRICATION

(30) Priority: 19.08.2011 FI 20115812
(43) Date of publication of application: 25.06.2014
(73) Proprietor: Metsäliitto Osuuskunta, 02100 Espoo (FI)
(72) Inventor: SOKKA, Kasperi, FI-02100 Espoo (FI)
(74) Representative: Seppo Laine Oy
(86) International application number: PCT/FI2012/050795
(87) International publication number: WO 2013/026956

(56) References cited:
- EP-A1- 2 281 961
- WO-A1-2008/110818
- WO-A1-2011/101546
- WO-A2-2006/091812
- WO-A2-2011/066209
- DE-A1- 19 533 564
- GB-A- 2 447 562
- GB-A- 2 447 562
- US-A1- 2009 205 277

## Description

The method relates to a composite panel according to the preamble to Claim 1.

Such a panel generally comprises at least one wood-based fibre layer and at least one functional layer, which is attached to the fibre layer, for example, by means of an adhesive layer.

The invention also relates to a method, according to the preamble to Claim 12, for manufacturing a composite panel, as well as a use according to Claim 13.

Previously known are various types of composite panel, which are manufactured by combining wood-based materials and at least one other material. When manufacturing a composite panel, it is sought to maximize the good properties of the material and to minimize the bad properties. It is previously known to form composite panels by mixing together various raw materials in order to create a composite panel. It is also known to form composite panels by surfacing, for example, a wood panel with various materials.

The use of various types of pressing method in the manufacture of various types of panel is also previously known.

The invention is intended to create a new type of composite panel, in which various properties suitable for the intended purpose are combined in one panel. In particular, the invention is intended to create a composite panel, which has good insulating properties.

The invention is based on a composite panel, which is formed from layers of a wood-based material and at least one layer of another material. The composite panel includes more than one layer of a wood-based material, and at least one functional layer, which is selected from the group: sound-insulation layer, thermal-insulation layer, moisture-barrier layer, and fire-protection layer, and combinations of these, is arranged in at least one interspace between the wood-based-material layers. The layers are stacked on top of each other in a predetermined order, adhesive layers are arranged between the layers to attach the layers to each other, and the layers are pressed together with the aid of a single pressing, in order to create a composite panel.

According to the invention, aerogel is included in at least one functional layer or at least one adhesive layer, or at least one functional layer and at least one adhesive layer. The use of aerogel in composite panels is known from WO 2008/110818, EP 2281961 and US 2009/205277, in roofing systems from WO 2006/091812, in racking panels from GB 2447562 and in composites from WO 2011/066209 and DE 19633564.

By means of the invention a composite panel which comprises at least two wood-based material layers is provided which contains in combination more than one functional layer, such as a sound-insulation layer, thermal-insulation layer, moisture-barrier layer, or fire-protection layer, or a combination thereof, which layers are attached together with the aid of an adhesive layer, at least one, preferably several of the said functional layers, or at least one of the adhesive layers contains aerogel or consists thereof. At least one functional layer is arrange in the interspace between more than one of the wood-based material layers, and at least two functional layers are different functional layers.

More specifically, the composite panel according to the invention is characterized by what is stated in the characterizing portion of Claim 1.

For its part, the method according to the invention is characterized by what is stated in the characterizing portion of Claim 12 and the use according to the invention by what is stated in Claim 13.

Considerable advantages over the prior art are achieved by means of the composite panel according to the invention.

The composite panel according to the invention is a strong, light, and durable structure.

By means of the invention, a multi-purpose composite panel combining many properties is achieved. For example, the composite panel according to the invention permits the panel material to have simultaneously thermal-insulation, sound-insulation, moisture-barrier, and fire-protection properties, as well as ballistic protection.

Thanks to the invention, only a single panel need be used to achieve many different functional purposes in the same application.
According to the invention, functional layers can be hidden under and between a wood or wood-veneer layer or layers. At the same time, a cheap support surface is obtained for expensive special layers, such as a ballistic layer and an aerogel layer, the latter of which acts as both thermal insulation and as a fire-protection layer. Concealment is a function as such, and at the same time provides a conventional aesthetic surface.

It should be noted that aerogels bind organic molecules about 130 more effectively than active carbon (calculated on a weight basis), so that the present panel, in which the aerogel is only covered by a wood material, which can act as an effective temporary remover of toxic substances from the air.

In the following, the invention is examined with the aid of a detailed description, with reference to the accompanying drawing.

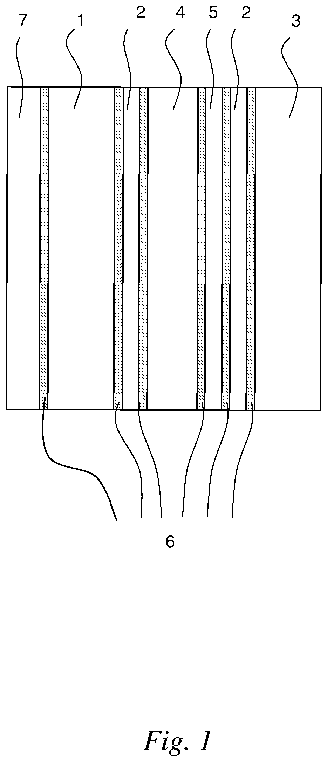

Figure 1 shows a simplified schematic diagram of one composite panel according to one embodiment of the invention.

In this connection, the term "composite panel" refers to any composite panel whatever, which is formed of layers formed of a wood-based material, and at least one other material layer.

In this connection, the term "wood-based material" refers to any wood material, or material formed of wood-fibre-based materials whatever, for example, wood veneer, such as coniferous or deciduous-wood veneer, plywood or wood panel or a similar wood-based material, such as sawn timber.

In this connection, the term "adhesive layer" refers to an intermediate layer formed of any as such known adhesive substance whatever, for example, resin, phenol-formaldehyde glue, melamine-formaldehyde glue, urea-formaldehyde glue and/or polyurethane glue, or some other adhesive substance suitable for the purpose, for joining different material layers to each other.

In this connection, the term "single pressing" refers to a method, in which all the desired component layers, i.e. the material layers and the adhesive layers, are stacked at one time to form a blank and the panel is formed in a single compression stage.

The term "aerogel" refers to a solid, microporous silicate foam (typically of fibrous silicon dioxide). The compressive strength of aerogel (silica) can be as great as 32 kp/cm², at a density of 0.6 kg/dm³. The compression of plywood typically requires a maximum of 14 kp/cm² and, according to a preferred embodiment of the invention, in the single pressing of the composite panel a compressive force is used, which is clearly less than the compressive strength of aerogel, for example, at least about 20 % less than it, but nevertheless greater than about 5, especially about 10 kp/cm². For example, the compressive force is about 10 - 25 kp/cm².

Aerogels suitable for compression according to the invention can be already manufactured even from sodium silicate (Na₂O:SiO₂).

Because the sound conductivity of aerogels is poor (speed ∼100 m/s, when the speed of sound in air is about 320 m/s and in normal solids always 6000 m/s), it can be used for excellent sound insulation.

The thermal conductivity of an aerogel is less than that of air, being even as little as 0.004 W/m K, for which reason it is suitable as thermal insulation.

The melting point of one preferred aerogel grade (silica) is about 1200 °C, so that it will withstand continuously temperatures of about 500 °C, at which wood will have already entirely pyrolysized.

The use of wood veneer to protect the aerogel is advantageous. According to our invention, the functional layers can be concealed inside a veneer or wooden panel that looks normal. Thus, a moisture-barrier, thermal-insulation, and ballistic layer can be put into the same product and concealed.

The following is a more detailed description of the functional layers and adhesive layers of the composite panel and their arrangement in the composite panel. As stated in the above description, each of these layers can contain an aerogel, for example, a silica aerogel, for example, to about 0.1 - 95 weight-%, or it can even consist entirely of an aerogel, as in a case in which aerogel felt is used as a functional layer. The functional layer can contain silica aerogel, which has a density of, for example, about 0.1 - 0.6 g/cm³.

In one embodiment of the invention, at least one functional layer is arranged on the surface of the composite panel, in order to form a surface layer.

In one embodiment of the invention, there is one functional layer.

In one preferred embodiment of the invention, the composite panel contains at least two functional layers.

In one embodiment of the invention, more than one functional layer is arranged between two wood-based material layers. In a second embodiment, at least two functional layers are located between wood-based material layers. In a third embodiment, at least three functional layers are located between wood-based material layers. In a fourth embodiment, at least four functional layers are located between wood-based material layers. Alternatively, one functional layer is arranged between two wood-based material layers.

In one particularly preferred embodiment of the invention, at least one functional layer is arranged between more than one two wood-based material layers.

In a second preferred embodiment of the invention, at least one reinforced layer is arranged as a functional layer between two wood-based material layers.

The functional layer can be a fibre-reinforced layer. In one embodiment, the fibre-reinforced layer is then formed from a fibre-derived material.

In a second preferred embodiment of the invention, the functional layer is a cellular panel. The cellular panel advantageously lightens the structure. The cellular panel can be any, as such known, cellular material whatever suitable for the purpose.

In a third preferred embodiment of the invention, the functional layer is an insulation-material layer.

In a fourth preferred embodiment of the invention, the functional layer is formed of a polymer-based material. In one embodiment, the polymer-based material can advantageously contain polyethylene, polypropylene, polyamide, aramid, carbon fibre, resin, cellulose, cellulose ester, cellulose ether, viscose fibre, cupro fibre, modal fibre, or other polymers or plastics suitable for the purpose, or various combinations of them.

In a fifth preferred embodiment of the invention, the functional layer is formed of a metal-based material.

The fibre-based material can contain natural fibres, such as vegetable fibres, for example, seed flock such as cotton, stalk fibre such as linen, leaf fibre such as sisal, or fruit fibre such as coconut, or animal fibres, for example, keratin substances such as wool or glandular secretions such as silk, or mineral fibres, for example asbestos; or artificial fibres, such as regenerated fibres, for example cellulose such as viscose, modal, cupro, or lyocell, or cellulose-acetate such as acetate or triacetate, or synthetic fibres, for example, polyamide, acryl, polyester, polyvinylchloride fibre, polypropylene or elastane, or inorganic fibres, for example, glass, metal, or rubber, or various combinations of these.

In one embodiment, the functional layer is formed of a polymer-based material, a fibre-based material, a metal-based material, or various combinations of these.

In one embodiment, the sound-insulation layer is formed of a cellular panel, a fibre-based material, a polyurethane insulation material, a cork material, a cork-composite material, or some other sound-insulating material suitable for the purpose.

In a second embodiment, the thermal-insulation layer is formed of a cellular panel, a fibre-based material, a polyurethane insulation material, a cork material, a cork-composite material, or some other thermally insulating material suitable for the purpose.

The reinforcement layer can be formed of a polymer-based material, a fibre-based material, glass, basalt, carbon, asbestos, wollastonite, silicates, or various combinations of these.

The reinforcement layer is preferably formed essentially in connection with an adhesive layer, for example, by arranging a suitable reinforcing material or suitable reinforcing fibres in the adhesive layer or by impregnating the reinforcement layer with an adhesive substance, thus creating an advantageously combined adhesive and reinforcement layer, or aerogel.

The moisture-barrier layer can be formed on a polymer-based material, which can be any polymer or plastic-based material whatever suitable for the purpose, for example, one of the polymer-based materials listed above.

In one embodiment, the fire-protection layer is formed of a metal-based material, for example, an aluminium film, or other fire-protection material suitable for the purpose.

In one preferred embodiment of the invention, at least one ballistic layer is arranged as a functional layer in connection with the composite panel. In one embodiment, the surface layer is a ballistic layer, preferably a ballistic protective layer. In one embodiment, the ballistic layer is arranged between wood-based material layers. In one embodiment, the ballistic layer is formed of a metal material, a metal-based material, a stone, mineral, or ceramic-based material, or various combinations of these, an the ballistic layer can be in a tile-like, sheet-like, or film-like form, always according to the embodiment.

The ballistic layer can also be formed of fibres with ballistic properties, or of other materials with ballistic properties. In one embodiment, a material with ballistic properties, for example fibres or a ceramic tile material, can be arranged in connection with some other functional layer to form combination layers with various properties. In this connection, the term ballistic protection refers to protection against flying pieces, preferably shrapnel or bullets.

The surface layer can be a reinforcement layer, a moisture-barrier layer, an insulation-material layer, or a combination of various types of layer.

In addition, the invention comprises a method for manufacturing any of the composite panels described above. According to the invention, more than one layer of wood-based material is stacked on each other, and at least one functional layer, which is selected from the group a sound-insulation layer, a thermal-insulation layer, and a fire-protection layer and combinations of these, is arranged between the wood-based material layers, and adhesive layers are arranged between the layers to joint the layers to each other, and the layers are compressed with the aid of a single pressing.

In addition, the invention is based on the use of any of the composite panels described above as a building material and/or a protective material, such as a thermal-insulation material, a sound-insulation material, a moisture-barrier material, a door material, or a fire-protection material, or as a protective panel, such as a ballistic shield or similar shield.

In one embodiment, the composite panel can be used as a floor, wall, ceiling, or roof material in permanent or temporary solutions in outdoor or indoor rooms. In addition, the composite panel can be used as a floor basepanel, for example, as a basepanel for a parquet or laminate floor.

Embodiments incorporating an aerogel layer as a fire-protection and thermal-insulation layer can be difficult to glue, if the composite product is thick, because the aerogel layer effectively insulates the transfer of heat. The aerogel layer (silica) is a highly efficient absorber of water. If polyvinyl alcohol, for example, is used as an adhesive on both sides of the aerogel layer, gluability of this layer can then be rapidly created even at room temperature (PVA hardens when water leaves it).

On the basis of the above, in the composite panel according to the invention the layer containing aerogel comprises an adhesive layer, which contains aerogel mixed with an adhesive.

The layer containing aerogel or consisting of aerogel can be glued to the other layers by means of a water-soluble polymer, such as polyvinyl alcohol.

The ballistic layer of the product can be supported by a polymer-fibre layer. This is suitable particularly in cases, in which the ballistic layer consists of a ceramic, concrete, or especially an MDF material (macro-defect-free cement product), or a combination of these. In this way, the manufacture of the product can be promoted.

A layer of MDF material even 3-mm thick can be used to stop a handgun bullet. A composite material according to the invention, in which there is an aerogel layer or a layer containing aerogel, as well as possibly an MDF layer, is suitable for very many special purposes. Thus, the product is highly suitable for manufacturing loudspeaker enclosures, particularly when wood, aerogel, and MDF-material layers are combined, as aerogel and wood attenuate vibration well, and the MDF product, as is known, possesses a good vibration-attenuating property (tan δ) and an advantageous Young's modulus (E = elongation tension/strain).

The composite panel according to the invention, shown in Figure 1, is intended to be used simultaneously as a building material and a protective material, such as a thermal-insulation material, a sound-insulation material, a moisture-barrier material, and a fire-protection material. The composite panel can be used as, for example, a ballistic shield or door material, or a floor, wall, or ceiling material.

In the composite panel of Figure 1, it is possible to use as such known wood-based veneers as the wood-based material 1, 3.

The composite panel of Figure 1 includes a first wood-based veneer layer 1, three different functional layers 2, 4, 5, and a second wood-based veneer layer 3. The functional layers 2, 4, 5 are located between the wood-based veneer layers 1, 3. The composite material includes two reinforcing layers 2 as functional layers, and cellular-panel layer 4 and an aluminium-film layer 5 arranged between them. The reinforcing layers 2 are formed of natural fibres and/or artificial fibres, or their staple fibres. A ballistic protective layer, which is formed of ceramic tile, is arranged as a surface layer 7 on the first wood-based veneer layer 1 of the composite panel. All the material layers 1, 2, 3, 4, 5 are joined to each other by adhesive layers 6, which contain an adhesive suitable for the application.

The composite panel according to the invention is suitable for use, as different embodiments, in connection with the most diverse practical applications.

The invention is not restricted to concern only the examples presented above, but instead many variations are possible, while remaining within the scope of the inventive idea defined in the Claims.

Though a solution is described above, in which the composite material always contains a wood layer, it is also possible to manufacture a multi-layer structure, which contains a combination of more than one functional layer, which is selected from a group, which comprises sound-insulation layers, thermal-insulation layers, moisture-barrier layers, as well as combinations of these, in which case adhesive layers are arranged in the interspaces between the layers to join the layers together, and in which case at least one layer, which is selected from the said functional layers and adhesive layers, comprises aerogel. The aerogel layer in question can either contain aerogel to about 0.1 - 95 weight-% of the layer, or can consist entirely of it (e.g. aerogel felt).

## Claims

1. Composite panel which comprises at least two wood-based material layers (1, 3), and, in at least one interspace between the wood-based material layers, there is arranged more than one functional layer (2, 4, 5), which is selected from the group: sound-insulation layer, thermal-insulation layer, moisture-barrier layer, and fire-protection layer, and combinations of these, in which case adhesive layers (6) are arranged in the interspaces between the layers (1, 2, 3, 4, 5), in order to join the layers to each other, and wherein at least one layer selected from the functional layers (2, 4, 5) and adhesive layers (6) comprises aerogel, wherein the layer comprising aerogel can contain aerogel to about 0.1 - 95 weight-% of the layer, or can consist entirely of aerogel, and the wood-based material layer (1, 3) is a wood or wood veneer layer, **characterized in that** at least one functional layer (2, 4, 5) is arranged in the interspace between more than one of the wood-based material layers (1, 3), and at least two functional layers (2,4,5) are different functional layers.

2. The composite panel according to claim 1, **characterized in that** the layer containing aerogel is aerogel felt.

3. The composite panel according to claim 1 or 2, **characterized in that** the functional layer contains silica-aerogel, the density of which is advantageously 0.1 - 0,6 g/cm³.

4. The composite panel according any of claims 1 - 3, **characterized in that** the layer containing aerogel is an adhesive layer, which contains aerogel mixed with adhesive.

5. The composite panel according to any of claims 1 - 4, **characterized in that** the layer containing or consisting of aerogel is glued to the other layers by means of a water-soluble polymer, such as polyvinylalcohol.

6. The composite panel according to any of claims 1 - 5, **characterized in that** it is manufactured by stacking the layers on top of each other in a predefined order and pressing the layers together with the aid of a single compression.

7. The composite panel according to any of the preceding claims,
**characterized in that** at least one functional layer is arranged on the surface of the composite panel, in order to create a surface layer (7).

8. The composite panel according to any of the preceding claims,
**characterized in that** the composite panel contains at least two functional layers (2, 4, 5, 7), and wherein preferably more than one functional layer (2,4,5) is arranged between two wood-based material layers (1,3).

9. The composite panel according to any of the preceding claims,
**characterized in that** the functional layer (2, 4, 5, 7) is a fibre-reinforced layer, cellular panel, an insulating-material layer, a layer, formed of a polymer-based material, or a layer formed of a metal-based material.

10. The composite panel according to any of the preceding claims,
**characterized in that** a ballistic layer is arranged as a functional layer (2, 4, 5, 7) in connection with the composite panel.

11. The composite panel according to any of the preceding claims,
**characterized in that** at least one, preferably every wood-containing material layer of the composite panel consists of a wood veneer layer, plywood or sawn timber.

12. Method for manufacturing a composite panel according to any of the preceding claims, **characterized in that** more than one layer of a wood-based material are stacked on top of each other, more than one functional layer, which is selected from the group: sound-insulation layer, thermal-insulation layer, moisture-barrier layer, and fire-protection layer, and combinations of these, is arranged in the interspace between at least two of the wood-based material layers, and adhesive layers are arranged in the interspaces between the layers to join the layers together, and the layers are compressed together with the aid of a single pressing, in which case at least one layer selected from the functional layers (2, 4, 5) and the adhesive layers (6) comprise aerogel, and at least two functional layers are different functional layers.

13. Use of a composite panel according to any of Claims 1 - 11 as a building material or as a protective material or for manufacturing a loudspeaker enclosure.

14. Use according to Claim 13, **characterized in that** the panel's ability to insulate sound, heat, moisture, or to protect from fire, or to act as a ballistic shield material is exploited.

## Patentansprüche

1. Verbundpaneel, welches mindestens zwei holzbasierte Werkstoffschichten (1, 3) aufweist und wobei in mindestens einem Zwischenraum zwischen den holzbasierten Werkstoffschichten mehr als eine Funktionsschicht (2, 4, 5), welche ausgewählt ist aus der Gruppe: Schalldämmungsschicht, Wärmedämmungsschicht, Feuchtigkeitsbarriere-Schicht und Feuerschutz-Schicht sowie Kombinationen von diesen, angeordnet ist, in welchem Fall Klebstoffschichten (6) in den Zwischenräumen zwischen den Schichten (1, 2, 3, 4, 5) angeordnet sind, um die Schichten miteinander zu verbinden, und wobei mindestens eine Schicht, welche aus den Funktionsschichten (2, 4, 5) und den Klebstoffschichten (6) ausgewählt ist, Aerogel aufweist, wobei die Aerogel enthaltende Schicht Aerogel bis ungefähr 0,1 - 95 Gew.-% der Schicht aufweisen kann oder vollständig aus Aeorgel bestehen kann, und wobei die holzbasierte Werkstoffschicht (1, 3) ein Holz oder eine Holzfurnierschicht ist, **gekennzeichnet dadurch, dass** mindestens eine Funktionsschicht (2, 4, 5) in dem Zwischenraum zwischen mehr als einer der holzbasierten Werkstoffschicht (1, 3) angeordnet ist und dass mindestens zwei Funktionsschichten (2, 4, 5) unterschiedliche Funktionsschichten sind.

2. Das Verbundpaneel gemäß Anspruch 1, **gekennzeichnet dadurch, dass** die Aerogel enthaltende Schicht ein Aerogel-Filz ist.

3. Das Verbundpaneel gemäß Anspruch 1 oder 2, **gekennzeichnet dadurch, dass** die Funktionsschicht Kieselsäure-Aerogel enthält, dessen Dichte vorteilhafterweise 0,1 - 0,6 g/cm³ beträgt.

4. Das Verbundpaneel gemäß irgendeinem der Ansprüche 1 - 3, **gekennzeichnet dadurch, dass** die Aerogel enthaltende Schicht eine Klebstoffschicht ist, welche mit Klebstoff vermischtes Aerogel enthält.

5. Das Verbundpaneel gemäß irgendeinem der Ansprüche 1 - 4, **gekennzeichnet dadurch, dass** die Aerogel enthaltende oder aus Aerogel bestehende Schicht mittels eines wasserlöslichen Polymers, wie beispielsweise Polyvinylalkohol, an die anderen Schichten geklebt ist.

6. Das Verbundpaneel gemäß irgendeinem der Ansprüche 1 - 5, **gekennzeichnet dadurch, dass** es hergestellt ist, indem die Schichten in einer vordefinierten Reihenfolge übereinander gestapelt werden und die Schichten mittels eines einzelnen Zusammenpressens zusammengepresst werden.

7. Das Verbundpaneel gemäß irgendeinem der vorhergehenden Ansprüche,
**gekennzeichnet dadurch, dass** mindestens eine Funktionsschicht an der Oberfläche des Verbundpaneels angeordnet ist, um eine Oberflächenschicht (7) zu schaffen.

8. Das Verbundpaneel gemäß irgendeinem der vorhergehenden Ansprüche,
**gekennzeichnet dadurch, dass** das Verbundpaneel mindestens zwei Funktionsschichten (2, 4, 5, 7) enthält, und wobei vorzugsweise mehr als eine Funktionsschicht (2, 4, 5) zwischen zwei holzbasierten Werkstoffschichten (1, 3) angeordnet ist.

9. Das Verbundpaneel gemäß irgendeinem der vorhergehenden Ansprüche,
**gekennzeichnet dadurch, dass** die Funktionsschicht (2, 4, 5, 7) eine faserverstärkte Schicht, ein zellenartiges Paneel, eine Dämmwerkstoffschicht, eine aus einem polymerbasierten Werkstoff gebildete Schicht oder eine aus einem metallbasierten Werkstoff gebildete Schicht ist.

10. Das Verbundpaneel gemäß irgendeinem der vorhergehenden Ansprüche,
**gekennzeichnet dadurch, dass** eine ballistische Schicht als eine Funktionsschicht (2, 4, 5, 7) in Verbindung mit dem Verbundpaneel angeordnet ist.

11. Das Verbundpaneel gemäß irgendeinem der vorhergehenden Ansprüche,
**gekennzeichnet dadurch, dass** mindestens eine, vorzugsweise jede holzenthaltende Werkstoffschicht des Verbundpaneels aus einer Holzfurnierschicht, aus Sperrholz oder aus Schnittholz besteht.

12. Verfahren zum Herstellen eines Verbundpaneels gemäß irgendeinem der vorhergehenden Ansprüche, **gekennzeichnet dadurch, dass** mehr als eine Schicht eines holzbasierten Werkstoffs übereinander gestapelt werden, mehr als eine Funktionsschicht, welche ausgewählt ist aus der Gruppe: Schalldämmungsschicht, Wärmedämmungsschicht, Feuchtigkeitsbarriere-Schicht und Feuerschutz-Schicht sowie Kombinationen von diesen, in dem Zwischenraum zwischen mindestens zwei der holzbasierten Werkstoffschichten angeordnet wird, und Klebstoffschichten in den Zwischenräumen zwischen den Schichten angeordnet werden, um die Schichten miteinander zu verbinden, und die Schichten mithilfe einer einzelnen Pressung zusammengepresst werden, in welchem Fall mindestens eine Schicht, welche aus den mindestens zwei Funktionsschichten (2, 4, 5) und den Klebstoffschichten (6) ausgewählt ist, Aerogel aufweist und mindestens zwei Funktionsschichten (2, 4, 5) unterschiedliche Funktionsschichten sind.

13. Verwendung eines Verbundpaneels gemäß irgendeinem der Ansprüche 1 - 11 als ein Bauwerkstoff oder als ein Schutzwerkstoff oder zur Herstellung eines Lautsprechergehäuses.

14. Verwendung gemäß Anspruch 13, **gekennzeichnet dadurch, dass** die Fähigkeit des Paneels, Schall, Wärme, Feuchtigkeit zu dämmen oder vor Feuer zu schützen oder als ein Ballistischer-Schild-Werkstoff zu fungieren ausgenutzt wird.

## Revendications

1. Panneau composite qui comprend au moins deux couches de matériau à base de bois (1, 3) et, dans au moins un espace intermédiaire entre les couches de matériau à base de bois, est agencée plus d'une couche fonctionnelle (2, 4, 5) qui est sélectionnée dans le groupe comprenant : une couche d'isolation sonore, une couche d'isolation thermique, une couche barrière contre l'humidité, et une couche de protection contre le feu, et des combinaisons de celles-ci, dans lequel cas des couches adhésives (6) sont agencées dans les espaces intermédiaires entre les couches (1, 2, 3, 4, 5) afin de relier les couches les unes aux autres, et dans lequel au moins une couche sélectionnée parmi les couches fonctionnelles (2, 4, 5) et les couches adhésives (6) comprend de l'aérogel, dans lequel la couche comprenant de l'aérogel peut contenir de l'aérogel en une proportion d'environ 0,1 à 95 % en poids de la couche, ou peut être entièrement constituée d'aérogel, et la couche de matériau à base de bois (1, 3) est une couche de bois ou de feuille mince de bois, **caractérisé en ce qu'**au moins une couche fonctionnelle (2, 4, 5) est agencée dans l'espace intermédiaire entre plus d'une des couches de matériau à base de bois (1, 3), et au moins deux couches fonctionnelles (2, 4, 5) sont des couches fonctionnelles différentes.

2. Panneau composite selon la revendication 1, **caractérisé en ce que** la couche contenant de l'aérogel est un feutre d'aérogel.

3. Panneau composite selon la revendication 1 ou 2, **caractérisé en ce que** la couche fonctionnelle contient de l'aérogel de silice dont la densité est avantageusement de 0,1 à 0,6 g/cm³.

4. Panneau composite selon l'une quelconque des revendications 1 à 3, **caractérisé en ce que** la couche contenant de l'aérogel est une couche adhésive, qui contient de l'aérogel mélangé à un adhésif.

5. Panneau composite selon l'une quelconque des revendications 1 à 4, **caractérisé en ce que** la couche contenant ou constituée d'aérogel est collée aux autres couches au moyen d'un polymère soluble à l'eau tel que de l'alcool polyvinylique.

6. Panneau composite selon l'une quelconque des revendications 1 à 5, **caractérisé en ce qu'**il est fabriqué par empilement des couches les unes sur les autres dans un ordre prédéfini et par pression des couches les unes contre les autres à l'aide d'une compression unique.

7. Panneau composite selon l'une quelconque des revendications précédentes, **caractérisé en ce qu'**au moins une couche fonctionnelle est agencée sur la surface du panneau composite, afin de créer une couche de surface (7).

8. Panneau composite selon l'une quelconque des revendications précédentes, **caractérisé en ce que** le panneau composite contient au moins deux couches fonctionnelles (2, 4, 5, 7) et dans lequel de préférence plus d'une seule couche fonctionnelle (2, 4, 5) est agencée entre deux couches de matériau à base de bois (1, 3).

9. Panneau composite selon l'une quelconque des revendications précédentes, **caractérisé en ce que** la couche fonctionnelle (2, 4, 5, 7) est une couche renforcée de fibres, un panneau alvéolaire, une couche de matériau d'isolation, une couche faite d'un matériau à base de polymère ou une couche faite d'un matériau à base de métal.

10. Panneau composite selon l'une quelconque des revendications précédentes, **caractérisé en ce qu'**une couche pare-balles est agencée en tant que couche fonctionnelle (2, 4, 5, 7) en association avec le panneau composite.

11. Panneau composite selon l'une quelconque des revendications précédentes, **caractérisé en ce qu'**au moins une, de préférence chacune des couches de matériau contenant du bois du panneau composite consiste en une couche de feuille mince de bois, du contreplaqué ou du petit bois d'oeuvre.

12. Procédé de fabrication d'un panneau composite selon l'une quelconque des revendications précédentes, **caractérisé en ce que** deux couches ou plus d'un matériau à base de bois sont empilées les unes sur les autres, deux couches fonctionnelles ou plus, qui sont sélectionnées dans le groupe comprenant : une couche d'isolation sonore, une couche d'isolation thermique, une couche barrière contre l'humidité, et une couche de protection contre le feu, et des combinaisons de celles-ci, sont agencées dans l'espace intermédiaire entre au moins deux des couches de matériau à base de bois, et des couches adhésives sont agencées dans les espaces intermédiaires entre les couches pour relier les couches les unes aux autres, et les couches sont comprimées à l'aide d'une pression unique, dans lequel cas au moins une couche sélectionnée parmi les couches fonctionnelles (2, 4, 5) et les couches adhésives (6) comprend de l'aérogel, et au moins deux couches fonctionnelles sont des couches fonctionnelles différentes.

13. Utilisation d'un panneau composite selon l'une quelconque des revendications 1 à 11, en tant que matériau de construction ou en tant que matériau de protection ou pour la fabrication d'une enceinte de haut-parleur.

14. Utilisation selon la revendication 13, **caractérisée en ce que** la capacité du panneau à isoler contre le bruit, la chaleur, l'humidité ou à protéger contre le feu ou à agir comme un matériau pare-balles est exploitée.
